# EUROPÄISCHE PATENTSCHRIFT

(11) **EP 2 841 873 B1**
(45) Veröffentlichungstag und Bekanntmachung des Hinweises auf die Patenterteilung: **03.02.2016**
(21) Anmeldenummer: 13715718.6
(22) Anmeldetag: 15.04.2013
(51) Int. Cl.: G01B 5/012, G01B 11/00, G01B 5/016

(54) **SENSORELEMENT FÜR EINE MESSMASCHINE, INSBESONDERE EINE KOORDINATENMESSMASCHINE**
SENSOR ELEMENT FOR A MEASURING MACHINE, IN PARTICULAR A COORDINATE MEASURING MACHINE
ÉLÉMENT DE CAPTEUR POUR UNE MACHINE DE MESURE, EN PARTICULIER UNE MACHINE DE MESURE DE COORDONNÉES

(30) Priorität: 24.04.2012 EP 12165403
(43) Veröffentlichungstag der Anmeldung: 04.03.2015
(73) Patentinhaber: Hexagon Technology Center GmbH, 9435 Heerbrugg (CH)
(72) Erfinder: JENSEN, Thomas, CH-9400 Rorschach (CH); SAUPE, Frank, CH-9327 Tübach (CH); VULLIOUD, Benjamin, CH-1302 Vufflens-la-Ville (CH)
(74) Vertreter: Holzheu, Christian
(86) Internationale Anmeldenummer: PCT/EP2013/057844
(87) Internationale Veröffentlichungsnummer: WO 2013/160143

(56) Entgegenhaltungen:
- EP-A1- 2 161 536
- WO-A1-2008/010492
- DE-A1- 3 215 878
- US-A- 5 756 886
- US-B1- 6 449 861

## Beschreibung

Die Erfindung betrifft ein Sensorelement für eine Messmaschine, insbesondere eine Koordinatenmessmaschine, nach dem Oberbegriff des Anspruchs 1.

In vielen Anwendungsbereichen besteht das Bedürfnis, Oberflächen von Objekten und damit auch die Objekte selbst mit hoher Genauigkeit zu vermessen. Dies gilt insbesondere für die fertigende Industrie, für die das Vermessen und Überprüfen von Oberflächen von Werkstücken hohe Bedeutung hat. Zu diesem Zweck existiert eine Vielzahl von Ansätzen, die von kontaktierenden Verfahren bis hin zu optischen Sensoren reichen, bei denen elektromagnetische Strahlung zur Vermessung verwendet wird.

Zumeist wird hierbei ein für die jeweilige Messaufgabe spezifisches Sensorelement über eine Kupplung an der Messmaschine befestigt. Solche Sensorelemente weisen typischerweise eine Tastkomponente mit einem Tastglied auf, welches über die zu vermessende Oberfläche geführt wird und das im taktilen Fall die Oberfläche berührt und über das Erzeugen oder das Aufrechterhalten des Kontaktes diese Oberfläche vermisst. Hierbei wird beim sogenannten antastenden Verfahren bzw. bei Touch-Trigger Probes durch Erzeugen eines mechanischen Kontakts mit der Oberfläche ein Schaltvorgang ausgelöst. Solche Lösungen sind beispielsweise aus der EP 1 617 171 bekannt.

Alternativ oder ergänzend kann aber auch eine berührungslose optische Vermessung der Oberfläche erfolgen, wobei das Tastglied hierbei einen Strahlgang für die Messstrahlung aufweist und diese in Richtung der Oberfläche emittiert und wieder empfängt.

Für beide Vermessungsverfahren ist aufgrund der Auslegung des Tastglieds ein ungewollter oder mit zu hohen Kräften verknüpfter Kontakt im Sinne einer Kollision nachteilig und zu vermeiden. Zum einen kann dies durch geringe Geschwindigkeiten und Beschleunigungen beim Bewegen der Tastkomponente realisiert werden, was jedoch längere Messzeiten zur Folge hat. Deshalb ist es im Stand der Technik bekannt, Sensorelemente bauartbedingt mit einem Kollisionsschutz zu versehen, der im Fall des ungewollten Kontaktes mit einer Oberfläche durch ein Abkippen oder Ablösen der Tastkomponente Beschädigungen des Sensorelementes oder des zu vermessenden Werkstückes vermeidet oder verringert.

Die US 6449861, die DE 3215878, die US 5756886 und die WO 2008/010492 offenbaren Sensorelemente für Koordinatenmessmaschinen mit einer Tastkomponente und einem Sensorgehäuse mit Tastkomponentenaufnahme, wobei das Sensorgehäuse eine Kupplung zu der Koordinatenmessmaschine aufweist.

Im Stand der Technik werden hierzu meist Sensorelemente verwendet, welche die Tastkomponente mechanisch oder elektromagnetisch an das Lager einer Tastkomponentenkupplung heranziehen, wobei die Richtung der Kraft vom Tastglied weg und in Richtung der Kupplung mit der Meßmaschine weist, was auch als sogenannte z-Richtung bzw. z-Achse bezeichnet wird. Diese Anordnung erlaubt einen einfachen Aufbau unter Verwendung von Elektro- oder Permanentmagneten sowie von Federn. Bei einer seitlichen Kollision kann dann die Tastkomponente gegenüber der Tastkomponentenkupplung abkippen und entweder abgelöst werden oder nach einer eingeleiteten Gegenbewegung wieder zurückklappen.

So ist beispielsweise aus der EP 2 161 536 ein optischer Sensor mit Kollisionsschutz für eine Messmaschine bekannt, der einen sensorseitigen Kupplungsteil zur mechanischen und optischen Verbindung mit der Messmaschine und ein Sensorelement umfasst. Der Sensor weist eine Sensorschutzkupplung als Kollisionsschutz mit einem messmaschinenseitigen Kupplungsteil und einen sensorelementseitigen Kupplungsteil auf, wobei die Kupplung durch die anziehende Kraft von Magneten oder einer anziehenden, d.h. vorgespannten Zugfeder erfolgt. Im Fall einer Kollision wird die Kupplung durch Abkippen geöffnet. Zwischen den Kupplungsteilen der Sensorschutzkupplung ist ein Lichtwellenleiter geführt, wobei diesen ein Lichtwellenleiterschutzelement umgibt, dessen Enden an den zugeordneten Kupplungsteilen der Sensorschutzkupplung befestigt sind.

Problematisch hierbei ist jedoch der in z-Richtung, d.h. in Richtung der Längsachse des Tastglieds, fehlende oder nur geringfügig bestehende Kollisionsschutz, so dass bei einer größeren senkrechten Bewegungskomponente Beschädigungen auftreten können. Wie erwähnt kann es bei solchen Lösungen des Stands der Technik beim Zurückklappen zu Einklemmvorgängen von Komponenten kommen, wie z.B. bei optischen Fasern, für die somit wieder Schutzvorkehrungen getroffen werden müssen. Zudem erlauben bisherigen Lösungen keine wirksame Dämpfung der Trennungs- bzw. Abkippvorgänge.

Eine Aufgabe besteht darin, ein verbessertes Sensorelement zur optischen Vermessung von Oberflächen bzw. zur Erfassung von Oberflächentopographien bereitzustellen.

Eine weitere Aufgabe besteht darin, ein solches Sensorelement bereitzustellen, welches einen verbesserten Kollisionsschutz in Längsrichtung des die Oberfläche abtastenden Tastglieds aufweist.

Eine weitere Aufgabe besteht darin, einen verbesserten Schutz von Messleitungen zwischen der Tastkomponente und der Tastkomponentenaufnahme bereitzustellen.

Schliesslich besteht eine Aufgabe darin, eine Dämpfung der Relativbewegung von Tastkomponente und Tastkomponentenaufnahme zu ermöglichen.

Diese Aufgaben werden durch die Gegenstände des Anspruchs 1 oder der abhängigen Ansprüche gelöst bzw. die entsprechenden Lösungen weitergebildet.

Das Sensorelement ist so ausgebildet, dass die das Tastglied tragende Tastkomponente nicht mehr an die der Kupplung mit der Messmaschine zugeordneten Seite der Tastkomponentenkupplung herangezogen wird, sondern in umgekehrter Weise eine Kraft erfährt, welche von dieser Seite wegweist. Hierzu wird das Gehäuse des Sensorelements so ausgebildet, dass dieses eine Basis der Tastkomponente, welche zur bewegbaren bzw. ablösbaren Verbindung mit der Tastkomponentenaufnahme dient, zumindest teilweise umschliesst, so dass das Sensorelement eine Tastkomponentenaufnahme aufweist, welche der Kupplungsseite zur Verbindung mit der Messmaschine gegenüberliegt. Zwischen dieser Tastkomponentenaufnahme und der Kupplungsseite ist die Basis angeordnet und wird durch eine Kraft in Richtung der Tastkomponentenaufnahme und damit in Richtung des Tastglieds gedrückt. Die Basis wird hierbei durch wenigstens ein Lager aufgenommen, das auf der Tastkomponentenaufnahme angeordnet ist, die hierzu ringförmig ausgebildet sein kann.

Die in Richtung der Tastkomponentenaufnahme und damit in Richtung des Tastglieds wirkende Kraft wird erfindungsgemäss durch eine zentral angeordnete zylinder- oder spindelförmige Druckfeder ausgeübt, die im Inneren eine optische Faser aufweist, die zur Führung von Messstrahlung auf die Oberfläche und damit zu deren Vermessung dient. Durch die zentrale Führung wird zudem eine in alle Richtung gleichartige und nicht beschränkte Beweglichkeit gewährleistet. Zudem wird die Gefahr eines Einklemmens der Faser bei einem Zurückklappen der Basis der Tastkomponente vermieden, wobei diese aufgrund ihrer zentralen Führung nur über eine geringe Längsverschiebbarkeit verfügen muss. Damit kann die erfindungsgemässe Lösung auch auf ein separates Schutzelementes für die Faser verzichten. Durch eine solche Führung wird zum einen die Faserführung in der zentralen Achse ermöglicht, so dass die Abkippbewegung in alle Richtungen in gleichartiger Weise erfolgen kann. Zum anderen kann die Feder bei entsprechender Auslegung, z.B. mit geringerer Steigung, auch eine Schutzwirkung für die Faser entfalten, da sie eine Verlagerung der Faser nach aussen, d.h. ausserhalb der zentralen Achse, ebenso verhindern kann wie auch das Eindringen von anderen Komponenten in den durch die Druckfeder definierten zentralen Führungskanal.

Der Aufbau bewirkt dabei, dass die zur Fixierung bzw. Kupplung verwendete Kraft zugleich auch eine Bewegung in z-Richtung, also in der Längsachse des Tastgliedes und in Richtung auf die Verbindung mit der Messmaschine hin, zulässt und dieser abbremsend entgegenwirkt.

Durch die Kraftwirkung in Richtung des Tastglieds können zudem in dessen Längsachse wirkende Kollision aufgenommen werden, ohne dass es zu Beschädigungen kommt. Dabei kann die Basis vorteilhafterweise einen Zylinder oder eine Walze aufweisen, welche in einem Lager ruht, dessen zwei Anlagepunkte durch zwei federbeaufschlagte Kugeln oder Walzen definiert werden. Je nach Einstellung der zulässigen Relativbewegung zwischen Basis bzw. deren Zylinder und den Kugel des Lagers kann die Anordnung als reiner Kollisionsschutz für den optischen Taster oder zusätzlich auch als schaltender Taster, d.h. als Touch-Trigger Probe, ausgebildet werden.

Das Sensorelement weist somit im Ergebnis eine federunterstützte Lagerung des Tasters bzw. des Tastglieds in drei Richtungen, d.h. die sogenannten x-, y- und z-Richtungen auf. Im Gegensatz zu den Sensorelementen des Stands der Technik ist der erfindungsgemäss realisierbare Bewegungsspielraum in z-Richtung gross genug, um einen echten Kollisionsschutz auch in dieser Richtung zu ermöglichen. Zudem wird durch die Federcharakteristik der wirkenden Kraft eine Abbremsung und dynamische Aufnahme wirkender Kräfte der Kollision bewirkt. Bei optischen Systemen und beim Verfahren taktiler Systeme zu ihrer Startpositionen werden höhere Geschwindigkeiten möglich, da auch eine Kollision aufgrund einer vertikalen Bewegung bewältigt werden kann.

Vorteilhaft ist zudem die Füllung des die Basis der Tastkomponente und deren Lager enthaltenen Abschnittes des Sensorgehäuses mit Öl oder anderen fluiden Medien mit einer Dämpfungswirkung, da hierdurch eine hohe Rückkehrgenauigkeit gewährleistet werden kann. Durch die Ölfüllung wird somit auch die Notwendigkeit von Kalibrierungen verringert.

Ein erfindungsgemässes Sensorelement wird nachfolgend anhand von in der Zeichnung figürlich oder schematisch dargestellten Ausführungsbeispielen rein beispielhaft näher beschrieben oder erläutert. Im einzelnen zeigen
- Fig.1: die Darstellung eines ersten Ausführungsbeispiels des erfindungsgemässen Sensorelements;
- Fig.2: die Darstellung des Sensorgehäuses und der darin angeordneten Komponenten des ersten Ausführungsbeispiels des erfindungsgemässen Sensorelements;
- Fig.3a-b: die schematische Darstellung der im Sensorgehäuse angeordneten Komponenten des ersten Ausführungsbeispiels des erfindungsgemässen Sensorelements;
- Fig.4a-c: die schematische Darstellung der Relativbewegung der Tastkomponente gegenüber dem auf der Tastkomponentenaufnahme angeordneten Lager in einem erfindungsgemässen Sensorelement;
- Fig.5a-e: die schematische Darstellung von erfindungsgemässen Ausführungsbeispielen für Tastkomponenten und Lagern und
- Fig.6a-c: die schematische Darstellung von erfindungsgemässen Ausführungsbeispielen eines Tastglieds zur optischen und taktilen Vermessung.

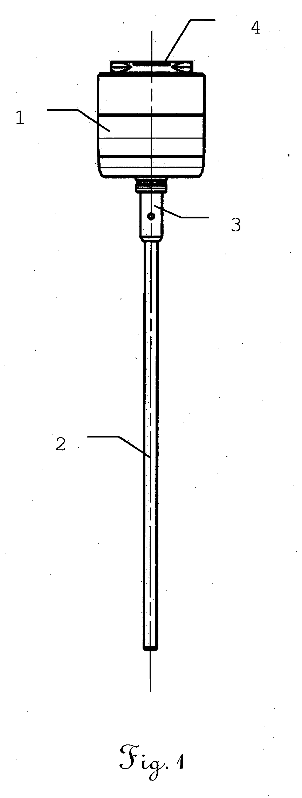

Fig.1 zeigt die Darstellung eines ersten Ausführungsbeispiels des erfindungsgemässen Sensorelements in einer Aussenansicht. Das Sensorgehäuse weist eine optische und/oder taktile Tastkomponente auf, die ihrerseits aus einem Tastglied 2 und einer dieses aufnehmenden Tastgliedaufnahme 3 besteht und zur Vermessung einer Oberfläche dient, wobei das Tastglied in einem Naheverhältnis zur Oberfläche bewegt wird, d.h. zu einer für die optische Vermessung optimalen Messdistanz geführt wird. Im Fall einer zusätzlichen bzw. ergänzenden schaltenden Ausgestaltung kann hierbei auch eine unmittelbare Kontaktierung der Oberfläche bewirkt werden. Das Tastglied kann hierbei mit dem unteren Ende bzw. dem unteren Bereich die Oberfläche abtastend abfahren oder aber in diesem Bereich optische Messstrahlung emittieren und wieder empfangen.

Im Sensorgehäuse 1 ist eine Tastkomponentenaufnahme 5 mit einem wenigstens ein Teil der Tastgliedaufnahme 3 kontaktierendem Lager angeordnet, über welches die Tastkomponente und damit das Tastglied 2 relativ zur Tastkomponentenaufnahme bzw. zum Sensorgehäuse 1 bewegbar verbunden ist. Auf der dem Tastglied 2 gegenüber liegenden Kupplungsseite weist das Sensorgehäuse 1 eine Kupplung 4 zur, insbesondere lösbaren, Verbindung mit der Messmaschine auf. Hierbei wird das Sensorelement typischerweise an ein Element eines Gelenkarms oder eine in mehreren Achsen verfahrbare Pinole montiert, wobei das Auswechseln von Sensorelementen und deren Montage bzw. Kopplung häufig automatisiert erfolgen.

Zur Realisierung der Beweglichkeit kann im oberen Teil des Sensorgehäuses 1 eine aufgewickelte optische Faser mit mehreren Zentimetern Länge angeordnet sein, was eine erhöhte Flexibilität im Herstellungs- und Wartungsprozess erlaubt. Eine optische Verbindung zur Messmaschine ist durch Steckverbindungen realisierbar, so dass die Auswerteelektronik ausserhalb des Sensorelementes verbleiben kann. Ein Beispiel für eine solche Ausgestaltung als optisches Sensorelement kann der EP 2 194 357 entnommen werden.

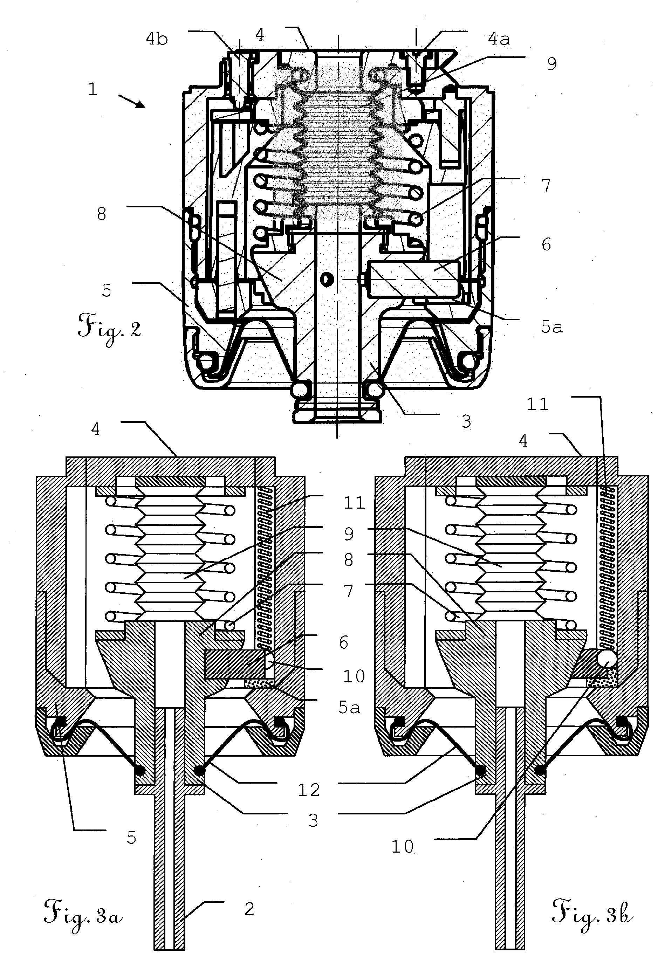

In den Fig.2 und Fig.3a-b erfolgt die detaillierte bzw. schematische Darstellung des Sensorgehäuses 1 und der darin angeordneten Komponenten des ersten Ausführungsbeispiels des erfindungsgemässen Sensorelements. Im Inneren des Sensorgehäuses 1 befindet sich die Basis 8 der Tastgliedaufnahme 3, die vom Sensorgehäuse 1 bzw. von der Tastkomponentenaufnahme 5 umfasst wird. Diese Tastkomponentenaufnahme 5 ist der Kupplungsseite gegenüberliegend im Sensorgehäuse 1 angeordnet und trägt mindestes ein Lager. Auf der Tastkomponentenaufnahme 5 kann eine zur Kupplungsseite weisende, insbesondere ringförmige Anlagefläche zur Aufnahme des mindestens einen Lagers ausgebildet sein. Ein Lager wird jeweils durch zwei Kugeln 10 gebildet, die einen Abstand zueinander aufweisen und durch Federn 11 in ihrer Lage gehalten werden.

Die Basis 8 weist Vorsprünge bzw. Verlängerungen auf, die als Lagerzapfen 6 wirken und beispielsweise als Zylinder bzw. Walzen ausgebildet sind. Diese Lagerzapfen kontaktieren die beiden Kugeln 10 des Lagers, so dass zwei definierte Auflagepunkte definiert werden. Der Abstand der Kugeln 10 wird hierbei auf den Durchmesser der Lagerzapfen 6 abgestimmt. Die Bewegung des Lagerzapfens 6 innerhalb des Lagers, d.h. in der Position zwischen den Kugeln 10, wird durch einen Anschlag 5a beschränkt. Durch diesen Anschlag 5a werden die Eintauchtiefe des Lagerzapfens 6 in die Kugeln 10 und damit die wirkende Kräfte wie auch die Dynamik und die Auslösecharakteristik des Lagers bestimmt.

Zwischen den Kugeln 10 und den im ruhenden Zustand dazwischen liegenden Lagerzapfen 6 wird an den Anlagepunkten eine elektrische leitfähige Verbindung realisiert, die über die Federn 11 weiter geführt werden kann, so dass eine Auslenkung des Lagerzapfens 6 aus dem Lager über die Unterbrechung des Stromkreises detektiert wird. In dieser Weise kann eine Schaltungsanordnung sowohl das Auslösen beim Kontakt des Tastgliedes 2 mit der Oberfläche im Fall einer antastenden Ausführung registrieren als auch einen Kollisionsfall erkennen.

Vorteilhafterweise ist die Basis 8 tellerförmig, d.h. mit einem gegenüber den übrigen Bereichen der Tastgliedaufnahme 3 im Querschnitt vergrösserten Teilbereich, ausgebildet und besitzt drei im Abstand von 120° angeordnete Lagerzapfen 6, denen jeweils ein Lager zugeordnet ist. Diese Lager bzw. die zugehörigen Lagerzapfen 6 können sich entweder in der Ebene der tellerförmigen Basis 8 oder einer hierzu parallelen Ebene befinden. Gleichermassen kann auch auf eine tellerförmige Ausbildung verzichtet werden und dennoch eine gleichartige Lagerung erfolgen, wobei dann ggf. die Lagerzapfen 6 mit vergleichsweise grösserer Länge ausgebildet werden. Durch die tellerförmige Ausgestaltung lässt sich jedoch eine mechanisch günstige und stabile Anordnung realisieren.

In dieser Anordnung ist die Lagerung der Tastkomponente statisch bestimmt. Allerdings kann auch eine hiervon abweichende Zahl von Lagern bzw. Lagerzapfen 6 verwendet werden. So kann z.B. auch ein Drehgelenk oder Scharnier anstelle einer der drei Kombinationen von Lager und Lagerzapfen 6 verwendet werden, wenn die Messmaschine eine Vorzugsmessrichtung besitzt oder wenn andere Einschränkungen hinsichtlich der Messrichtung oder der Kollisionsabläufe bestehen.

Damit liegt die Basis 8 der Tastkomponente zwischen Kupplungsseite und Tastkomponentenaufnahme 5 und wird mit einer in Richtung des Tastglieds 2 gerichteten Kraft beaufschlagt, die durch eine Druckfeder 7 als Element zur Erzeugung der Kraft erzeugt wird. Die Kraft wirkt somit in Richtung auf das Ende des Tastgliedes, welches im Betriebszustand der Oberfläche bzw. dem Werkstück als ganzem zugewandt ist, d.h. die Kraft drückt dieses Tastglied von der Verbindung mit der das Sensorelement führenden Trägerkomponente der Messmaschine weg, so dass eine in Richtung der Oberfläche wirkende Kraft resultiert, die bei einem Kontakt der durch die Oberfläche ausgeübten Kraft entgegenwirkt. Aufgrund der elastischen Auslegung gibt die Anordnung in dieser Richtung, wobei die hierbei erzeugte Bewegung durch die gegenwirkende Kraft der Druckfeder 7 abgebremst wird.

Die Verwendung einer Schraubenfeder als zentral angeordnete zylinder- oder spindelförmige Druckfeder bietet den erfindungsgemässen Vorteil, in deren Inneren, d.h. insbesondere in ihrer Längsachse, eine optische Faser oder auch zusätzlich eine andere Messleitung führen zu können.

Um eine Dämpfung der Bewegungen und eine hohe Wiederholgenauigkeit zu gewährleisten, kann der die Mechanik der Tastkomponente enthaltende Teil des Sensorgehäuses 1 mit Öl oder einer anderen bewegungsdämpfenden Flüssigkeit gefüllt sein. Um den ölgefüllten Bereich nach aussen abzudichten, wird das Sensorgehäuse 1 nach unten hin mit einer Membran 12 verschlossen. Zudem können Messleitungen in einem zentral, insbesondere innerhalb der Druckfeder 7 angeordnetem Faltenbalg 9 geführt werden.

Die Kupplung 4 kann neben einer Steckkupplung für eine optische Faser als optischen Kontakt 4a auch drei elektrische Kontakte 4b zur Kollisionserkennung, zur Verbindung mit einem im Sensorgehäuse befindlichen auslesbaren und vorzugsweise programmierbaren bzw. reprogammierbaren Speichermedium, wie z.B. einem EEPROM, und zur Erdung aufweisen. Im Speichermedium bzw. EEPROM werden die individuellen Daten bzw. Parameter für jedes Sensorelement gespeichert, wie z.B. Seriennummer, Fokusposition der optischen Tastfunktion, Arbeitsbereich und Länge des Tastglieds 2, so dass das Sensorelement als sog. Smart-Probe seine spezifischen Daten nach Herstellung der Kommunikationsverbindung im Rahmen des Ankupplungsvorgangs bereitstellt. Das Speichermedium kann hierbei ebenfalls über die elektrischen Kontakte 4b von aussen ausgelesen bzw. programmiert werden. Darüber hinaus können auch weitere Sensorikkomponenten oder Sensoriken, wie z.B. ein Temperatursensor oder Inertialsensoren in dem Sensorgehäuse 1 angeordnet sein oder die antastende bzw. kollisionsdetektierende Messfunktionalität durch eine entsprechende Schaltungsanordnung integriert werden.

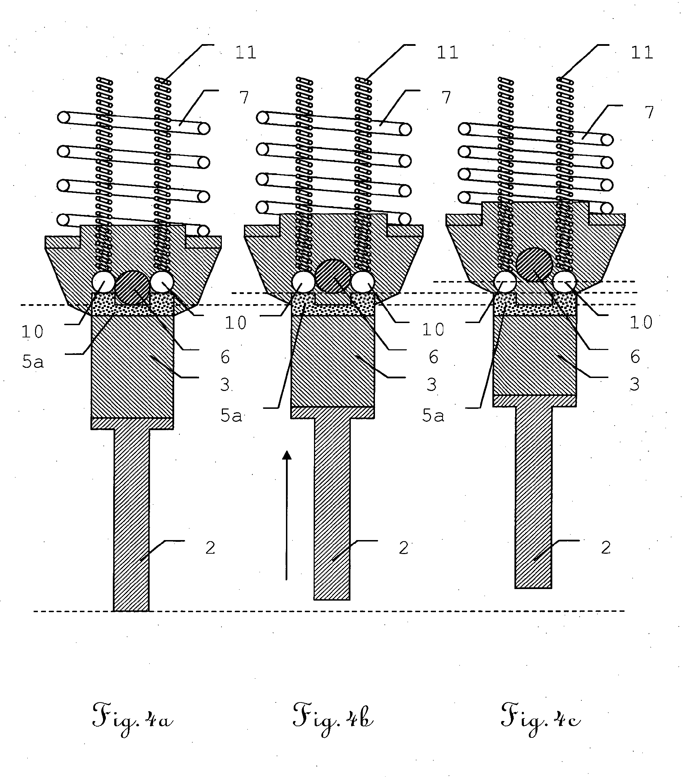

Fig.4a-c erläutert in schematischer Darstellung eine vertikale Relativbewegung der Tastkomponente gegenüber dem auf der Tastkomponentenaufnahme angeordneten Lager in einem erfindungsgemässen Sensorelement. In Fig.4a ist der Zustand für einen Kollisionsschutz mit einem vollständig in das Lager eingekuppelten Lagerzapfen 6 dargestellt. Dieser Lagerzapfen 6 liegt nun mit seinem Mittelpunkt unterhalb der Mittelpunkte der Kugeln 10, die durch jeweils eine zugeordnete Feder 11 in ihrer Position fixiert werden. Erfindungsgemäss können jedoch anstelle der Kugeln 10 auch andere Lagerkomponenten Verwendung finden, wie bspw. zwei Walzen. Die stabile Lage des Lagerzapfens 6 wird durch den als Vertiefung ausgebildeten Anschlag 5a definiert, so dass ein Gleitlager mit zwei Anlagepunkten an den Kugeln und einem Anschlag realisiert ist. Je nach Wahl von Anschlagtiefe und Radius der Kugeln 10 sowie Radius des Lagerzapfens 6 kann die Auslösecharakteristik des Lagers von einem robusten Kollisionsschutz, der eine Mindestkraft zum Auskuppeln und Lösen des Lagerzapfens 6 aus dem Lager erfordert, bis hin zu einem labilen Gleichgewicht einer antastenden Probe eingestellt werden, bei dem die geringe Kraftwirkung eines leichten Antastens bereits zum Lösen der elektrischen Verbindung zwischen Lagerzapfen 6 und wenigstens einer der beiden Kugeln 10 und damit zu einem Schaltvorgang führt.

Bei einer Kollision mit einem Objekt, welche das Tastglied 2 und damit die Tastkomponente in Richtung auf die Kupplung, d.h. in der hier vertikal dargestellte z-Achse, verschiebt, erfolgt auch eine gleichgerichtete Bewegung der Tastgliedaufnahme 3 und damit des Lagerzapfens 6, welche diesen gegenüber den Kugeln 10 des Lagers anhebt. Diese Bewegung wird in Fig.4b veranschaulicht. In diesem Zustand ist zwar die mechanische Fixierung des Lagerzapfen bereits aufgebrochen, der elektrische Kontakt und damit der Stromkreis bleibt jedoch durch den unverändert bestehenden Kontakt des Lagerzapfens 6 mit den Kugeln 10 geschlossen. Der für den Lagerzapfen 6 unter Aufrechterhaltung des elektrischen Kontaktes ermöglichte Bewegungsspielraum erlaubt bspw. eine geringfügiges Streifen eines Objektes, bei dem durch die zugelassene Auslenkung des Tastgliedes 2 eine Beschädigung vermieden wird, ohne dass jedoch zeitgleich eine Kollision detektiert wird. Somit existiert ein gewisser Grenzbereich erlaubter Kontakte. Überschreitet die Bewegung jedoch das durch die Wahl von Kugel- und Lagerzapfenradien sowie der Anschlagtiefe voreingestellte zulässige Mass, was in Fig.4c gezeigt wird, kommt es zur Unterbrechung des elektrischen Kontakts, so dass das auftreten einer Kollision detektiert und der Antrieb abgeschaltet oder in seiner Bewegungsrichtung umgekehrt werden kann. Aufgrund der verbleibenden Spielräume zum weitergehenden Einfedern können Beschädigungen verhindert werden. Zur Steuerung eines solchen Bewegungsvorgangs kann das Sensorelement oder die Messmaschine eine Schaltungsanordnung aufweisen, die so ausgebildet ist, dass ein durch den Kontakt des Tastglieds 2 mit der Oberfläche hervorgerufenes Öffnen des Stromkreises als antastender Schaltvorgang registriert wird.

Um eine stabile und statisch bestimmte Lagerung zu ermöglichen, welche die Bewegung des Sensorelements in drei Achsen erlaubt, wird die Tastkomponentenaufnahme so ausgelegt, dass sie drei die Basis bzw. deren Lagerzapfen 6 kontaktierende Lager aufweist, welche in einer zur Basis parallelen Ebene mit einem Winkelabstand von 120° zueinander angeordnet sind.

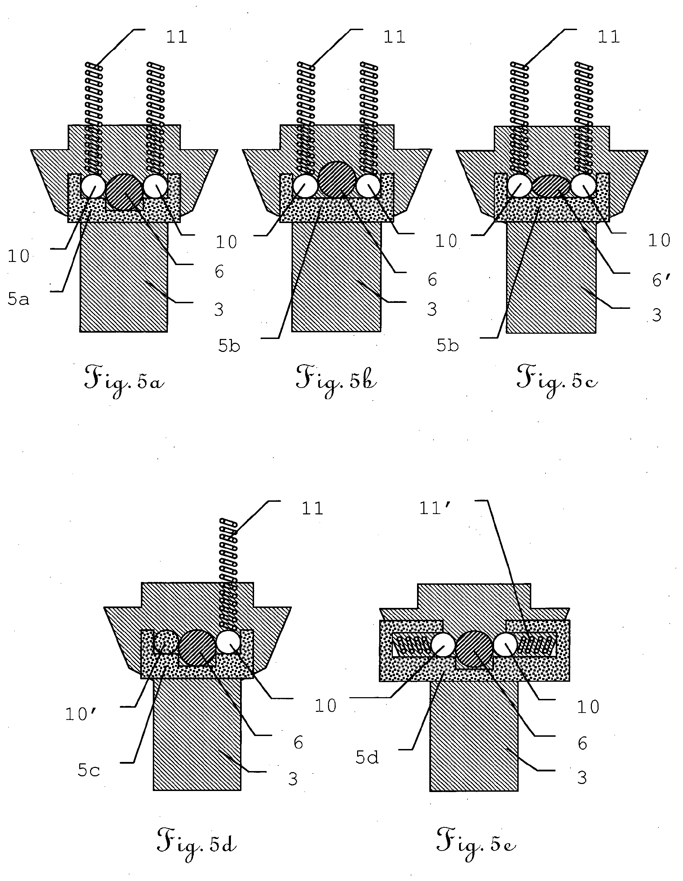

Verschiedene erfindungsgemässe Ausführungsbeispiele für Tastkomponenten mit Lagerzapfen 6 und Lager werden in den Fig.5a-e schematisch dargestellt.

Fig.5a zeigt die in den Fig.4a-c verwendete Lageranordnung mit einem Anschlag 5a mit einer Nut für den Lagerzapfen 6, so dass der Mittelpunkt, d.h. die Längsachse des Lagerzapfens 6 unterhalb des Mittelspunkts der Kugeln 10 zu liegen kommt. Zur Überwindung der Fixierung im Lager muss der Lagerzapfen 6 eine Strecke nach oben bewegt werden, wobei der Lagerzapfen den elektrischen Kontakt mit den Kugeln 10 aufrecht erhält. In diesem Fall müssen die Kugeln 10 bei der Bewegung des Lagerzapfens eine geringfügige seitliche Bewegung ausführen, so dass der entsprechende Spielraum hierfür vorgesehen werden muss.

In Fig.5b wird eine Anordnung gezeigt, bei welcher durch die ebene Oberfläche des Anschlags 5b der Mittelpunkt des Lagerzapfens 6 oberhalb des Mittelpunkts der Kugeln 10 liegt, so dass eine Fixierung im Lager ausschliesslich über die auf die Basis der Tastkomponente wirkende Kraft erfolgt. Bereits kleine Auslenkungen führen zum Öffnen des elektrischen Stromkreises, so dass ein leichtes Antasten des Tastgliedes an eine zu vermessende Oberfläche erkannt und ein entsprechendes Signal generiert werden kann. Zugleich wird durch diese Anordnung der bereits oben erläuterte Kollisionsschutz realisiert. Eine Unterscheidung zwischen beabsichtigtem Antasten und nicht beabsichtigter Kollision kann hierbei bspw. durch Berücksichtigung zusätzlicher Informationen erfolgen. Wird beispielsweise beim Heranfahren an ein zu vermessendes Werkstück ein Kontakt in einem räumlichen Bereich detektiert, der ausserhalb des räumlichen Volumens des Werkstücks liegt, so wird dieser als Kollision qualifiziert. Somit kann eine solche Anordnung bei mechanisch identischer Auslegung je nach Betriebszustand bzw. Zusatzinformationen sowohl für eine antastende Messfunktion als auch zur Kollisionserkennung verwendet werden.

Grundsätzlich können auch für Lagerzapfen 6 und Kugeln 10 gleiche Durchmesser gewählt werden oder aber der Lagerzapfen 6 mit elliptischem Querschnitt ausgebildet werden, was in Fig.5c gezeigt wird. Liegen die Mittelpunkte und die Anlagepunkte in einer Ebene senkrecht zum Vektor der in Richtung der Tastglieds 2 wirkenden Kraft, so wird - ohne Berücksichtigung dieser Kraft - ein labiles Gleichgewicht realisiert, das durch die Reibung an den Anlagepunkten charakterisiert ist.

Wie in Fig.5d dargestellt, kann anstelle von zwei Kugeln oder Walzen auch eine der beiden Anlagepunkte durch eine gekrümmte Fläche einer Ausformung 10' der als Anschlag 5c dienenden Komponente gebildet werden.

Ebenso kann die federnde Lagerung nicht nur durch Kugeln 10 mit in Richtung des Tastglieds ausgerichteten Federn bewirkt werden, sondern auch durch senkrecht oder in einem anderen Winkel orientierte Federn 11', wie dies in Fig.5e erläutert wird.

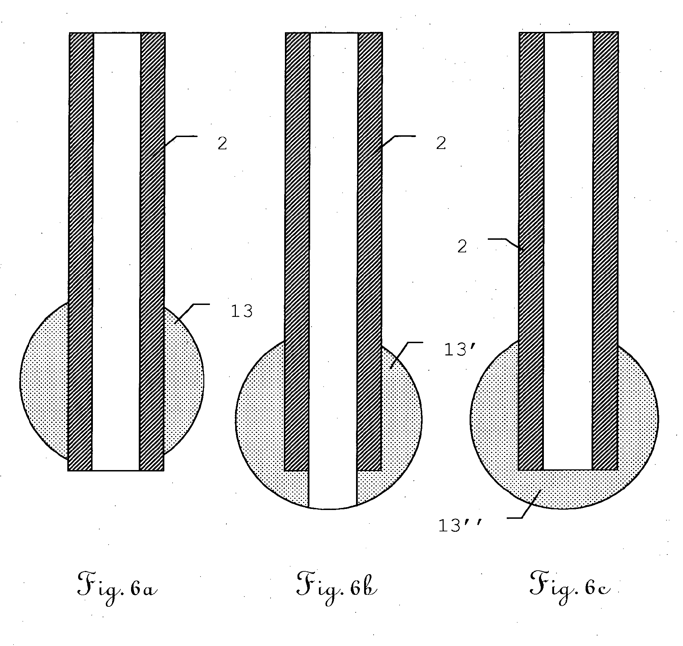

Fig.6a-c zeigt die schematische Darstellung von Ausführungsbeispielen eines Tastglieds zur optischen und taktilen Vermessung, wobei diese Ausgestaltung eines Tastglieds auch unabhängig von dem erfindungsgemässen Sensorelement realisierbar ist. Hierbei trägt ein Tastglied 2 mit einer optischen Strahlführung zur optischen Vermessung auch eine Kugel 13, 13' oder 13" zur taktilen Vermessung der Oberfläche. Die Kugel 13,13',13" weist eine Apertur für die optische Strahlführung auf, die wie in Fig.6a dargestellt als eine Öffnung in der Kugel 13 ausgebildet ist, die als ein Ende einer optischen Komponente zur Strahlführung, wie z.B. einer optischen Faser, ausgebildet ist, so dass die Messstrahlung nicht optisch durch das Kugelmaterial geführt werden muss.

Gleichermassen kann das Ende eines solchen Komponente zur Strahlführung aber auch in das Innere der Kugel 13' zurückversetzt angeordnet sein, wie dies in Fig.6b dargestellt wird, so dass zumindest ein Teil des Strahlgangs in das Innere der Kugel verlegt wird, wobei aber die Strahlführung hier in Bezug auf das Material der Kugel 13' als Freistrahloptik erfolgt, d.h. dieses nicht durchstrahlt.

Schliesslich kann die Strahlung auch durch das Material der Kugel 13" geführt werden, so dass ein nach aussen durchgehender Abschluss erfolgt. Dies erfordert jedoch, dass die Kugel 13" bzw. deren Material für die zur optischen Vermessung verwendete Wellenlänge durchlässig ist. Hierbei kann die Krümmung der Kugel 13" auch zur Strahlformung der Messstrahlung verwendet werden.

## Patentansprüche

1. Sensorelement für eine Messmaschine, insbesondere eine Koordinatenmessmaschine, mit wenigstens
- einer Tastkomponente mit einem Tastglied (2) zur optischen Vermessung einer Oberfläche und einer Tastgliedaufnahme (3) mit einer, insbesondere tellerförmigen, Basis (8),
- einem Sensorgehäuse (1) mit einer Tastkomponentenaufnahme (5) mit wenigstens einem die Basis (8) kontaktierenden Lager mit wenigstens einem definierten Anlagepunkt, insbesondere zwei definierten Anlagepunkten, über welches die Tastkomponente relativ zur Tastkomponentenaufnahme (5) bewegbar verbunden ist,
wobei
- das Sensorgehäuse (1) eine Kupplungsseite mit einer Kupplung (4) zur, insbesondere lösbaren, Verbindung mit der Messmaschine, insbesondere auch optische Kontakte (4a) und/oder elektrische Kontakte (4b), aufweist,
- das Sensorgehäuse (1) die Tastkomponente an der Basis (8) zumindest teilweise umschliesst und die Basis (8) mit einer in Richtung des Tastglieds (2) gerichteten Kraft beaufschlagt ist,
- die Tastkomponentenaufnahme (5) im Sensorgehäuse (1) der Kupplungsseite gegenüberliegt und das mindestens eine Lager trägt; und
- die Basis (8) der Tastkomponente zwischen Kupplungsseite und Tastkomponentenaufnahme (5) angeordnet ist,
**dadurch gekennzeichnet, dass**
zwischen Kupplungsseite und Basis (8) der Tastkomponente eine zentral angeordnete zylinder- oder spindelförmige Druckfeder (7) angeordnet ist, welche die Basis (8) gegen das wenigstens eine Lager drückt und eine in ihrer Längsachse geführte optische Faser aufweist.

2. Sensorelement nach Anspruch 1,
**dadurch gekennzeichnet, dass**
die Tastkomponente neben zusätzlich auch zur taktilen Vermessung der Oberfläche, insbesondere als schaltender Taster, ausgebildet ist.

3. Sensorelement nach Anspruch 1 oder 2,
**dadurch gekennzeichnet, dass**
die Tastkomponentenaufnahme (5) eine zur Kupplungsseite weisende, insbesondere ringförmige Anlagefläche zur Aufnahme des mindestens einen Lagers aufweist.

4. Sensorelement nach einem der vorangehenden Ansprüche,
**dadurch gekennzeichnet, dass**
• die Basis (8) wenigstens einen Lagerzapfen (6) mit gekrümmten Flächen zur Anlage an dem wenigstens einen Anlagepunkt des Lagers, insbesondere einen radial nach aussen gerichteten Zylinder, und
• das wenigstens eine Lager wenigstens eine federbelastete Kugel (10) oder Walze zur Definition des wenigstens einen Anlagepunkts aufweist.

5. Sensorelement nach Anspruch 4,
**dadurch gekennzeichnet, dass**
das wenigstens eine Lager wenigstens zwei federbelastete Kugeln (10) aufweist.

6. Sensorelement nach einem der vorangehenden Ansprüche,
**dadurch gekennzeichnet, dass**
die Tastkomponentenaufnahme (5) drei die Basis (8) kontaktierende Lager aufweist, welche in einer zur Basis (8) parallelen Ebene mit einem Winkelabstand von 120° zueinander angeordnet sind.

7. Sensorelement nach einem der vorangehenden Ansprüche,
**dadurch gekennzeichnet, dass**
durch den Kontakt der Basis (8) mit dem wenigstens einen Anlagepunkt ein geschlossener Stromkreis definiert wird.

8. Sensorelement nach Anspruch 7,
**dadurch gekennzeichnet, dass**
der Stromkreis über die elektrischen Kontakte (4b) durch die Kupplungsseite zur Auswertung nach aussen geführt wird.

9. Sensorelement nach einem der Ansprüche 7 oder 8,
**gekennzeichnet durch**
eine Schaltungsanordnung, die so ausgebildet ist, dass ein **durch** den Kontakt des Tastglieds (2) mit der Oberfläche hervorgerufenes Öffnen des Stromkreises
- als antastender Schaltvorgang und/oder
- als Kollision
registrierbar wird.

10. Sensorelement nach einem der vorangehenden Ansprüche,
**dadurch gekennzeichnet, dass**
innerhalb des Sensorgehäuses (1) ein auslesbares, insbesondere auch programmierbares, elektronisches Speichermedium zur Bereitstellung von Parametern des Sensorelements angeordnet ist, insbesondere welches über die elektrischen Kontakte (4b) der Kupplungsseite ausgelesen und ggf. programmiert werden kann.

11. Sensorelement nach einem der vorangehenden Ansprüche,
**dadurch gekennzeichnet, dass**
die Basis (8) und das wenigstens eine Lager in einem ölgefüllten Abschnitt des Sensorgehäuses (1) angeordnet sind.

12. Sensorelement nach Anspruch 11,
**gekennzeichnet durch**
einen zentralen öldichten Faltenbalg (9) zur axialen Führung der optischen Faser, insbesondere auch eines zusätzlichen Kabels.

13. Sensorelement nach einem der vorangehenden Ansprüche,
**dadurch gekennzeichnet, dass**
das Tastglied (2) sowohl eine optische Strahlführung zur optischen Vermessung als auch eine Kugel (13,13',13'') zur taktilen Vermessung der Oberfläche aufweist.

14. Sensorelement nach Anspruch 13,
**dadurch gekennzeichnet, dass**
die Kugel (13,13',13'') eine Apertur für die optische Strahlführung aufweist, insbesondere für die zur optischen Vermessung verwendete Wellenlänge durchlässig ist.

## Claims

1. A sensor element for a measuring machine, in particular a coordinate measuring machine, having at least
- a probe component with a probe element (2) for optical measurement of a surface, and a probe element holder (3), with a, in particular plate-shaped, base (8),
- a sensor housing (1) with a probe component holder (5) comprising at least one bearing which contacts the base (8) and has at least one defined contact point, in particular two defined contact points, by means of which the probe component is connected movably relative to the probe component holder (5),
wherein
- the sensor housing (1) has a coupling side with a coupling (4) for connection, in particular releasable connection, with the measuring machine, and in particular optical contacts (4a) and/or electrical contacts (4b),
- the sensor housing (1) at least partially encloses the probe component on the base (8) and a force directed in the direction of the probe element (2) is applied to the base (8),
- the probe component holder (5) lies opposite the coupling side in the sensor housing (1) and carries the at least one bearing; and
- the base (8) of the probe component is arranged between the coupling side and the probe component holder (5),
**characterized in that**
a centrally arranged cylindrical or spindle-shaped compression spring (7), which presses the base (8) against the at least one bearing and comprises an optical fiber guided in its longitudinal axis, is arranged between the coupling side and the base (8) of the probe component.

2. The sensor element as claimed in claim 1,
**characterized in that**
the probe component is furthermore also formed for tactile measurement of the surface, in particular as a switching probe.

3. The sensor element as claimed in either of claims 1 and 2,
**characterized in that**
the probe component holder (5) has a contact surface, in particular an annular contact surface, facing toward the coupling side for receiving the at least one bearing.

4. The sensor element as claimed in any one of the preceding claims,
**characterized in that**
• the base (8) comprises at least one journal (6) with curved surfaces for bearing on the at least one contact point of the bearing, in particular a cylinder directed radially outward, and
• the at least one bearing comprises at least one spring-loaded ball (10) or roller for definition of the at least one contact point.

5. The sensor element as claimed in claim 4,
**characterized in that**
the at least one bearing comprises at least two spring-loaded balls (10).

6. The sensor element as claimed in any one of the preceding claims,
**characterized in that**
the probe component holder (5) comprises three bearings contacting the base (8), which are arranged in a plane parallel to the base (8) with an angular spacing of 120° with respect to one another.

7. The sensor element as claimed in any one of the preceding claims,
**characterized in that**
a closed electrical circuit is defined by the contact of the base (8) with the at least one contact point.

8. The sensor element as claimed in claim 7,
**characterized in that**
the electrical circuit is fed out via the electrical contacts (4b) through the coupling side for evaluation.

9. The sensor element as claimed in either of claims 7 and 8,
**characterized by**
a circuit arrangement, which is formed in such a way that opening of the electrical circuit caused by contact of the probe element (2) with the surface can be registered
- as a sampling switching process and/or
- as a collision.

10. The sensor element as claimed in any one of the preceding claims,
**characterized in that**
a readable, and in particular programmable, electronic storage medium for providing parameters of the sensor element is arranged inside the sensor housing (1), in particular one which can be read out and optionally programmed via the electrical contacts (4b) of the coupling side.

11. The sensor element as claimed in any one of the preceding claims,
**characterized in that**
the base (8) and the at least one bearing are arranged in an oil-filled section of the sensor housing (1).

12. The sensor element as claimed in claim 11,
**characterized by**
a central oil-tight bellows (9) for axial guiding of the optical fiber, and in particular of an additional cable.

13. The sensor element as claimed in any one of the preceding claims,
**characterized in that**
the probe element (2) comprises both an optical beam guiding for optical measurement and a ball (13, 13', 13") for tactile measurement of the surface.

14. The sensor element as claimed in claim 13,
**characterized in that**
the ball (13, 13', 13") has an aperture for the optical beam guiding, and in particular is transmissive for the wavelength used for the optical measurement.

## Revendications

1. Elément de capteur pour une machine de mesure, en particulier une machine de mesure de coordonnées, avec au moins
- une composant palpeur avec un élément palpeur (2) pour la mesure optique d'une surface et un logement d'élément palpeur (3) avec une base, en particulier en forme d'assiette (8),
- un boîtier de capteur (1) avec un logement de composant palpeur (5) avec au moins un palier qui est en contact avec la base (8) avec au moins un point d'appui défini, en particulier avec deux points d'appui définis, par lequel le composant palpeur est relié de manière mobile par rapport au logement de composant palpeur (5),
cependant que
- le boîtier de capteur (1) présente un côté de couplage avec un couplage (4) pour la jonction, en particulier amovible, avec la machine de mesure, en particulier également des contacts optiques (4a) et/ou des contacts électriques (4b),
- le boîtier de capteur (1) enferme le composant palpeur au moins partiellement au niveau de la base (8) et une force orientée en direction de l'élément palpeur (2) est appliquée à la base (8),
- le logement de composant palpeur (5) dans le boîtier de capteur (1) est situé en face du côté de couplage et porte le palier qui existe au moins et
- la base (8) du composant palpeur est placée entre le côté de couplage et le logement de composant palpeur (5),
**caractérisé en ce**
**qu'**un ressort de compression (7) cylindrique ou fusiforme placé centralement est placé entre le côté de couplage et la base (8) du composant palpeur, ressort qui pousse la base (8) contre le palier qui existe au moins et qui présente une fibre optique guidée dans son axe longitudinal.

2. Elément de capteur selon la revendication 1, **caractérisé en ce que** le composant palpeur est également configuré en plus de pour la mesure tactile de la surface, en particulier comme un palpeur à commutation.

3. Elément de capteur selon la revendication 1 ou 2, **caractérisé en ce que** le logement de composant palpeur (5) présente une surface d'appui, en particulier annulaire, tournée vers le côté de couplage pour le logement du palier qui existe au moins.

4. Elément de capteur selon l'une des revendications précédentes, **caractérisé en ce que**
• la base (8) présente au moins un tourillon (6) avec des surfaces courbées pour l'appui sur le point d'appui qui existe au moins du tourillon, en particulier un cylindre orienté radialement vers l'extérieur et
• le palier qui existe au moins présente au moins une bille chargée par ressort (10) ou un rouleau pour la définition du point d'appui qui existe au moins.

5. Elément de capteur selon la revendication 4, caractérisé que le palier qui existe au moins présente au moins deux billes chargées par ressort (10).

6. Elément de capteur selon l'une des revendications précédentes, **caractérisé en ce que** le logement de composant palpeur (5) présente trois paliers qui sont en contact avec la base (8), paliers qui sont placés dans un plan parallèle à la base (8) avec un écart angulaire de 120° l'un par rapport à l'autre.

7. Elément de capteur selon l'une des revendications précédentes, **caractérisé en ce qu'**un circuit fermé est défini par le contact de la base (8) avec le point d'appui qui existe au moins.

8. Elément de capteur selon la revendication 7, **caractérisé en ce que** le circuit est guidé vers l'extérieur par les contacts électriques (4b) par le côté de couplage pour l'évaluation.

9. Elément de capteur selon l'une des revendications 7 ou 8, **caractérisé par** un arrangement de circuit qui est configuré tel qu'une ouverture du circuit provoquée par le contact de l'élément palpeur (2) avec la surface peut être enregistrée
- en tant que processus de commutation à palper et/ou
- en tant que collision.

10. Elément de capteur selon l'une des revendications précédentes, **caractérisé en ce qu'**un moyen de stockage électronique qui peut être lu, en particulier également qui peut être programmé, est placé à l'intérieur du boîtier de capteur (1) pour la mise à disposition de paramètres de l'élément capteur, en particulier qui peut être lu et, le cas échéant, programmé par les contacts électriques (4b) du côté de couplage.

11. Elément de capteur selon l'une des revendications précédentes, **caractérisé en ce que** la base (8) et le palier qui existe au moins sont placés dans une section remplie d'huile du boîtier du capteur (1).

12. Elément de capteur selon la revendication 11, **caractérisé par** un soufflet central étanche à l'huile (9) pour le guidage axial de la fibre optique, en particulier également d'un câble supplémentaire.

13. Elément de capteur selon l'une des revendications précédentes, **caractérisé en ce que** l'élément palpeur (2) présente aussi bien un guidage de faisceau optique pour la mesure optique qu'une bille (13, 13', 13") pour la mesure tactile de la surface.

14. Elément de capteur selon la revendication 13, **caractérisé en ce que** la bille (13, 13', 13") présente une ouverture pour le guidage de faisceau optique qui est en particulier perméable à la longueur d'onde utilisée pour la mesure optique.
